# EUROPEAN PATENT APPLICATION

(11) **EP 2 355 544 A1**
(43) Date of publication of application: **10.08.2011**
(21) Application number: 09180139.9
(22) Date of filing: 21.12.2009
(51) Int. Cl.: H04R 9/06, B06B 1/04

(54) **Suspension member for a vibration actuator**

(71) Applicant: NXP B.V., 5656 AG Eindhoven (NL)
(72) Inventor: Papakyriacou, Maria, Redhill, Surrey RH1 1DL (GB); Lutz, Josef, Redhill, Surrey RH1 1DL (GB); Lang, Florian, Redhill, Surrey RH1 1DL (GB)
(74) Representative: Williamson, Paul Lewis

(57) **Abstract**

A resilient suspension member for suspending a mass element of a vibration actuator. The suspension member is configured to extend elastically, providing a tensional restoring force, when the mass is displaced. Also provided is a resilient suspension member formed of a material having a Young's modulus less than 50MPa, preferably less than 20MPa.

## Description

This invention relates to vibration actuators and, in particular, to vibration actuators suitable for use in mobile phones or other personal electronic devices.

The vibrator function used in many mobile applications as an alarm or a "silent" incoming call alert is realized by electro-mechanically exciting a mass within the device. In the past, this was commonly achieved using rotational motion of an eccentric mass. The actuation means was an electric motor.

More recently, the motor has been replaced by a mechanical resonator (a mass and spring system) in which the mass oscillates linearly. The system is driven at its resonance frequency, typically by electromagnetic excitation.

One advantage of this solution is that the vibration actuator can share components with an electro-dynamic loudspeaker. The heavy magnet system needed to drive the loudspeaker can also comprise the mass for the vibrator, resulting in reduced total costs and a more efficient use of space within the mobile device.

Known vibrators using a mechanical resonator include a flat (plate) spring element made of metal. Such springs have a relatively small damping effect at the resonance-frequency. Important mechanical characteristics of the device, such as the resonance frequency and maximum excursion of the mass, are also highly sensitive to variations in the physical dimensions of the spring. The result is that the metal spring has a relatively thin, complex and delicate geometry which must be manufactured very accurately to achieve a consistent product. In addition, the spring components are produced by stamping them out from a metal sheet, which is relatively inefficient (in terms of the waste of materials) and expensive.

It has been proposed to achieve the required damping through additional measures, such as air damping, or the use of appropriate damping substances between the spring element and the frame. For example, viscous adhesive can be used to attach the spring to the frame. A further alternative is rigid mechanical limitation of the excursion.

According to an aspect of the present invention, there is provided a resilient suspension member for suspending a mass element of a vibration actuator, the suspension member being configured to extend elastically, providing a tensional restoring force, when the mass is displaced.

The suspension member stretches elastically and the tension created provides the force which acts to restore the mass to its neutral position.

The metal spring used in known vibration actuators works by bending (flexing) resiliently, like a conventional coil spring or plate spring. This reflects the mechanical properties of typical metals, whose modulus of elasticity is too high to allow meaningful displacement by stretching. The high modulus of elasticity (also known as Young's modulus) also means that the known metal spring needs to be very thin, to allow sufficient displacement by bending. The need to accurately control the thickness of a relatively thin metal spring makes the known spring difficult and expensive to manufacture reliably. A suspension member that works by extension of the material may therefore be cheaper and easier to manufacture than one which works by bending alone.

The suspension member preferably exhibits a progressive spring characteristic.

Here, a progressive spring characteristic means that the restoring (resisting) force exerted by the suspension member increases out of linear proportion to the displacement of the mass. This is in contrast with the spring characteristic for a conventional metal spring, which is substantially linear. Thus, the characteristic force-displacement curve for a progressive suspension member is non-linear. To define this in different terms: the rate of increase of the restoring force is low at a relatively small displacement, and relatively higher at a larger displacement. Such a characteristic helps to keep the excursion of the oscillating mass stable, without the need for separate damping measures. This allows maximum use to be made of the available space for movement of the mass element, while avoiding impacts between the mass and other parts of the device. Such impacts could reduce operational lifetime as well as causing undesired acoustic noise. If the need for separate damping measures can be eliminated, the cost of the overall device can also be reduced.

The suspension member may be further configured to flex elastically, providing a flexural restoring force, when the mass is displaced by a first distance; and to extend elastically, providing the tensional restoring force, when the mass is displaced by a second, greater distance, wherein the rate of increase of the tensional restoring force with increasing displacement of the mass is greater than that of the flexural restoring force.

Here the excursion of the suspension member includes two modes of deformation. In the first mode, for relatively small excursion, the suspension member bends (flexes). As the excursion (displacement) increases, the deformation changes into a second mode in which the suspension member stretches. The extensional deformation (stretching) results in a relatively stronger restoring force than the flexural deformation. This provides one beneficial way of achieving a progressive spring constant, as described above.

Flexing and extension can be distinguished by considering the forces acting in a cross-section of the suspension member: when flexing, the convex side of the suspension member is extended, while the concave side is compressed; when extending, both sides of the suspension member are extended. The flexing and extension may be provided by different parts of the suspension member or may be provided by the same part.

The suspension member may be formed of a material having a Young's modulus less than 50MPa, preferably less than 20MPa.

A low modulus of elasticity is desirable, because it allows the suspension member to be fabricated with thicker material. This typically means that accuracy requirements during manufacturing can be relaxed, because greater absolute variation in thickness can be accepted for the same percentage tolerances. Here, the modulus of elasticity is measured at room temperature.

The material of the suspension member may be an elastomer, preferably a silicone.

Elastomers such as silicone have a typical modulus of elasticity in the range 1 to 50 MPa. This allows a relatively thick suspension member to operate by extensional deformation. For silicones, in particular, the modulus of elasticity is stable with variations in temperature. This means that the mechanical characteristics of the suspension member can be substantially constant over the operating temperature range. Further advantages of elastomers are discussed below.

The suspension member may be configured for suspending the mass element by its perimeter from a frame, wherein the mass and frame are arranged co-axially and the mass is displaceable relative to the frame in the axial direction.

The mass and frame may have circular perimeters, in which case this arrangement results in a concentric mounting of the mass and frame.

The suspension member may comprise a plurality of support arms for connecting the mass and the frame.

The support arms may extend radially between the mass and frame.

The suspension member may define a continuous loop having an inner perimeter and an outer perimeter, and may further comprise a plurality of holes between the inner perimeter and the outer perimeter.

The suspension member thus comprises a ring or band between the mass and the frame. The ring may be annular. The number, sizes, shapes and positions of the holes can be used to further tune the vibration characteristics of the system. This provides additional degrees of design freedom. The holes can also provide a ventilation function, especially if the vibration actuator is integrated with an electro-dynamic loudspeaker as a single component.

The holes may be arranged equidistantly from at least one of the inner and the outer perimeter.

This provides a symmetric arrangement which tends to automatically balance the forces in the material of the suspension member. The holes may be circular.

The holes are preferably substantially uniformly spaced around the inner or outer perimeter.

This also contributes to symmetric distribution of forces.

The suspension member is preferably shaped such that, when the mass is displaced in the axial direction, any tangential forces exerted by the suspension member are balanced.

It is preferable that the mass does not rotate when it is displaced. That is, the motion of the mass should be a pure linear motion, without any rotational component. However, when using the known metal spring, the mass is mounted on arms that are all angled similarly with respect to the radial direction. This means that when the mass is displaced in the axial direction, the flexing of the arms results in rotation of the mass and the restoring force exerted by the flexing arms includes a circumferential (tangential) component. In the present case, this is avoided by ensuring that the tangential forces are either eliminated or, if not eliminated, are at least balanced.

The suspension member may further comprise at least one portion having an arcuate cross-section in a relaxed state of the suspension member.

This suspension member is bent or folded in its neutral, relaxed configuration. The at least one arcuate portion facilitates the two resilient modes of the suspension member. As the mass is displaced, the arcuate portion flattens or straightens, providing a flexural restoring force. As the mass is displaced further, the flattened part must extend, providing an extensional restoring force.

According to another aspect of the invention, there is provided a vibration actuator comprising: a frame; a mass element, movably connected to the frame by a resilient suspension member as described above; and actuation means, for exciting relative movement of the mass and the body.

The mass element may be suspended co-axially with the body. This provides a symmetrical suspension arrangement.

The actuation means may be electromagnetic; the mass element may comprise a magnet; and the magnet may also comprise part of a loudspeaker.

The suspension member of the present invention may be particularly beneficial if loudspeaker and vibration functions are combined in a single device, because it allows accurate and reliable control of the maximum excursion. This results in more efficient use of the limited space (volume) available in mobile devices. If the suspension member has a progressive spring characteristic, this may be particularly beneficial when the vibration and audio functions use shared components, because the excursion of the magnet system can be kept stable even when these functions are used simultaneously.

According to a further aspect of the invention, there is provided a personal mobile communications device comprising a vibration actuator as described above.

According to yet another aspect of the invention, there is provided a resilient suspension member for suspending a mass element of a vibration actuator, the suspension member formed of a material having a Young's modulus less than 50MPa, preferably less than 20MPa.

The known metal spring has a material modulus of elasticity significantly higher than this. The present inventors have recognised that use of a material with a smaller modulus can enable the thickness of the suspension member to be increased. Accordingly, the absolute manufacturing tolerance on the thickness can also be increased. Furthermore, a relatively low modulus of elasticity can enable the design of suspension members which use an extensional restoring force instead of (or in addition to) a flexural restoring force, as described above.

The material may be an elastomer, preferably a silicone. Such materials have high intrinsic damping and advantageously also high temperature-stability. In addition, suspension of the mass element by an elastomer rather than a metal spring can allow the suspension member to be thicker and have mechanical properties that are less sensitive to manufacturing variations. Silicones and other elastomers exhibit good temperature stability - especially compared with the viscous adhesives used for damping in known vibration actuators. Therefore, mechanical parameters such as compliance (the amount of displacement produced by a given force); resonance frequency; and damping ability do not change significantly with temperature. This ensures more consistent behaviour over the working temperature range of the device. An elastomer ring can be produced by techniques such as injection moulding, which is simpler and cheaper than the stamping process used for metal springs.

The suspension member may be a plate spring. That is, the suspension member may be substantially flat, in its relaxed state.

The invention will now be described by way of example with reference to the accompanying drawings, in which:
Fig. 1 schematically illustrates the construction of a vibration actuator;
Fig. 2, shows a metal plate spring for the vibration actuator of Fig. 1, according to the prior art;
Fig. 3 shows a suspension member according to a first embodiment of the invention, in plan and elevation; and
Fig. 4 shows a suspension member according to a second embodiment, in cross-section and plan.

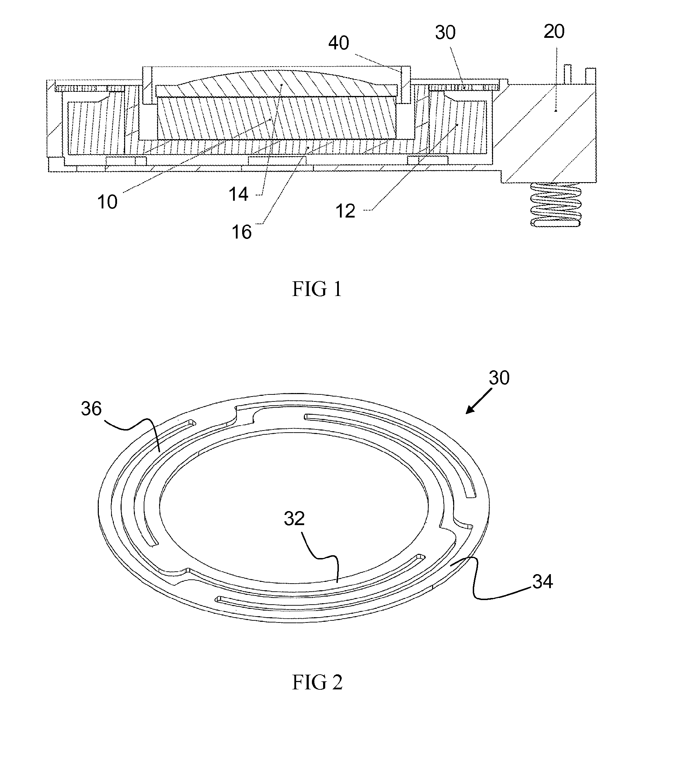

Fig. 1 shows a vibration actuator. This comprises a mass element 10, 12, 14, 16 suspended in a frame or basket-assembly 20. The movable mass is suspended from the frame by a spring 30. The mass comprises a magnetic system, which includes a magnet 10; a weight 12; a top plate 14; and a pot 16. The spring 30 is a resilient suspension member, which allows the mass element to oscillate within the frame (in the vertical direction, as shown in Fig 1).

A known spring is shown in greater detail in Fig 2. This comprises an inner ring 32 and an outer ring 34, connected by three arms 36. The mass is attached to the inner ring 32, while the outer ring 34 is attached to the frame. Flexing of the arms 36 enables the mass to oscillate out of the plane of the plate spring 30. However, the asymmetry of the arms 36 causes rotational motion in the plane of the spring.

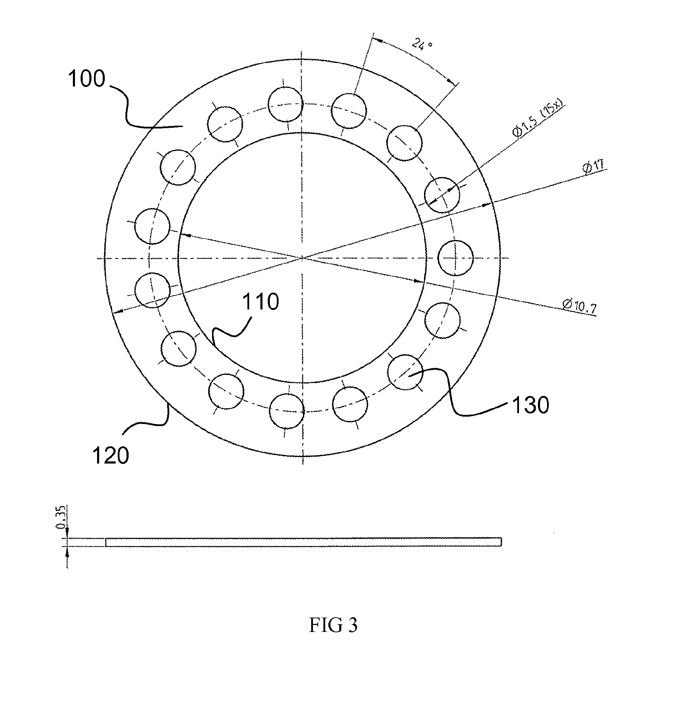

Fig 3 shows an example of a suspension member 100 according to a first embodiment of the invention. The shape and dimensions are chosen so that this suspension member 100 can replace the metal spring 30, without substantive modification to the other components of the vibration actuator. The suspension member 100 comprises a flat, annular ring of silicone. In this example, the material is Elastosil SL 3003/60. This has a Shore-A hardness of 60, and a modulus of elasticity of approximately 4MPa. Measurements in millimetres are shown on the drawing. The silicone annulus is 0.35mm thick. Its inner diameter is 10.7mm and its outer diameter is 17mm. In this example, the inner perimeter 110 and the out perimeter 120 are circular and concentric. Fifteen holes of diameter 1.5mm are distributed uniformly around the ring, slightly spaced from the internal perimeter 110. The angular spacing between adjacent holes is 24°.

Fig 3 shows the suspension member in its relaxed, neutral shape. When the mass is displaced relative to the frame 20, the suspension member 100 deforms resiliently. Initially, the silicone flexes elastically, deforming the circular shape of each hole. This bending creates a weak restoring force, acting to return the mass to its neutral position. As the displacement of the mass increases, the suspension member moves into a second mode of deformation. In this mode, the silicone extends elastically, as the flat annulus is stretched into a truncated cone shape. This extension of the material causes the restoring force to increase at a faster rate than when the suspension member 100 was merely flexing. This results in progressive, hardening spring characteristic.

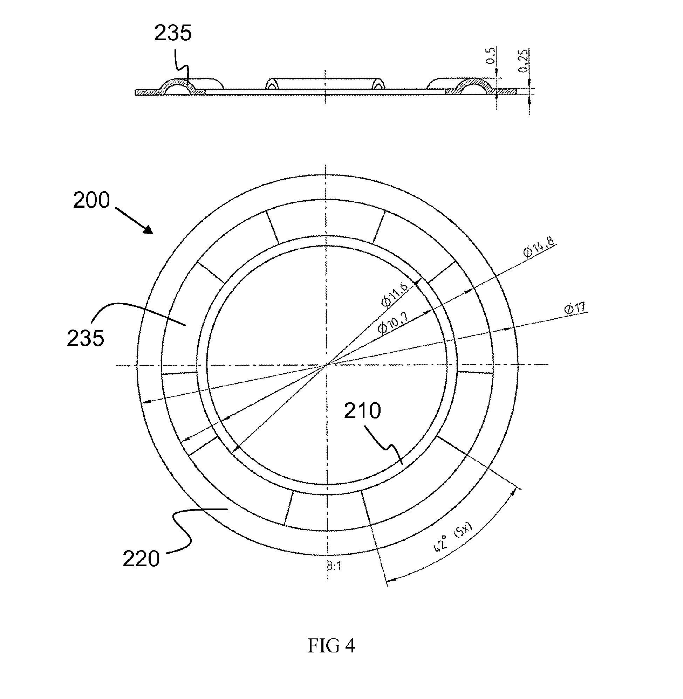

Fig 4 shows an example of a suspension member 200 according to a second embodiment of the invention. This can be viewed as comprising a first inner annular ring 210 and a second outer annular ring 220. These are movably and resiliently connected in a concentric arrangement, by five arms 235. Each arm consists of a web of silicone, forming an annular segment or strip in plan view. Each web-segment subtends an angle of 42° and has a substantially uniform, arcuate cross section in the radial direction. The thickness of the silicone is 0.25mm and the arc has a radius of approximately 0.5mm. The outer diameter of the inner ring is 11.6mm; while the inner diameter of the outer ring is 14.8mm. The inner and outer perimeters of the suspension member 200 are identical to those of the first embodiment. However, in this embodiment the silicone material is elastosil SL 3003/80. This has a Shore-A hardness of 80, and a modulus of elasticity of approximately 12MPa. Note that the upper drawing in Fig 4 shows a cross section through the suspension member along the horizontal line shown in the lower drawing.

In this second embodiment, the arcuate arms 235 facilitate the initial, bending mode of deformation. As the mass is initially displaced, the material first flexes so that the curved cross-section of the arms 235 is gradually straightened, in the radial plane. Eventually, the arms 235 are straight and form segments in the wall of a truncated cone. At this point, further displacement of the mass cannot be accommodated by bending. Instead, the arms 235 begin to extend resiliently. This provides the second mode of deformation in this embodiment and results in the progressive spring characteristic of the suspension member 200.

The suspension member of either embodiment can be produced easily and cheaply, for example by injection moulding, in one step. The ring can be thicker and more robust to manufacturing tolerances than the known metal spring design of Fig 2. Silicone provides high material damping and also good temperature stability. The same is true of a variety of similar elastomer materials. This means that parameters such as compliance, resonance frequency, and damping ability do not change significantly with temperature, ensuring uniform behaviour throughout the working temperature range. Because the suspension member of these embodiments has a progressive spring characteristic, there is no need for additional damping means in the vibration actuator. Furthermore, optimal use can be made of the available volume, because the excursion of the mass is accurately controlled. (That is, there is no need to provide a large margin of error, to accommodate unexpectedly large amplitude vibrations).

While the invention has been illustrated and described in detail in the drawings and foregoing description, such illustration and description are to be considered illustrative or exemplary and not restrictive; the invention is not limited to the disclosed embodiments.

For example, in the embodiments described, the arms connecting the inner perimeter to the outer perimeter of the suspension member are arranged radially. However, this is not essential. The connecting arms or webs may be oriented at a non-zero angle to the radial direction. However, it is still beneficial that the net forces exerted by the arms lie in a radial plane - that is, that circumferential (tangential) forces are balanced. This ensures that rotation is not imparted to the mass as it moves in the axial direction (out of the plane of the suspension member). The resulting motion should then be pure linear motion.

Fig. 3 showed an embodiment including a plurality of holes in an annular suspension member. In other embodiments, there may be additional groups of holes. For example, in some embodiments, there may be two or more sets of holes, with each set located at a different radius. Preferably, the centres of the holes of one set are offset, in the circumferential direction, from the centres of the holes of a set that is adjacent (in the radial direction). The holes may have shapes other than circles. These shapes may or may not be eccentric in aspect ratio. In particular, the holes may be elongated in the circumferential direction.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A resilient suspension member for suspending a mass element of a vibration actuator,
the suspension member being configured to extend elastically, providing a tensional restoring force, when the mass is displaced.

2. A resilient suspension member according to claim 1, wherein the suspension member exhibits a progressive spring characteristic.

3. A resilient suspension member according to claim 2, the suspension member being further configured
to flex elastically, providing a flexural restoring force, when the mass is displaced by a first distance; and
to extend elastically, providing the tensional restoring force, when the mass is displaced by a second, greater distance,
wherein the rate of increase of the tensional restoring force with increasing displacement of the mass is greater than that of the flexural restoring force.

4. A suspension member according to any of claims 1 to 3, formed of a material having a Young's modulus less than 50MPa, preferably less than 20MPa.

5. A suspension member according to claim 4, wherein the material is an elastomer, preferably a silicone.

6. A suspension member according to any preceding claim, configured for suspending the mass element by its perimeter from a frame, wherein the mass and frame are arranged co-axially and the mass is displaceable relative to the frame in the axial direction.

7. A suspension member according to claim 6, comprising a plurality of support arms for connecting the mass and the frame.

8. A suspension member according to claim 6, defining a continuous loop having an inner perimeter and an outer perimeter, and
further comprising a plurality of holes between the inner perimeter and the outer perimeter.

9. A suspension member according to claim 8, wherein the holes are arranged equidistantly from at least one of the inner and the outer perimeter.

10. A suspension member according to claim 8 or claim 9, wherein the holes are substantially uniformly spaced around the inner or outer perimeter.

11. A suspension member according to any of claims 6 to 10, shaped such that, when the mass is displaced in the axial direction, any tangential forces exerted by the suspension member are balanced.

12. A suspension member according to any of claims 6 to 11, further comprising at least one portion having an arcuate cross-section in a relaxed state of the suspension member.

13. A vibration actuator comprising:
a frame;
a mass element, movably connected to the frame by a resilient suspension member according to any preceding claim; and
actuation means, for exciting relative movement of the mass and the body.

14. A vibration actuator according to claim 13, wherein:
the actuation means are electromagnetic;
the mass element comprises a magnet; and
the magnet also comprises part of a loudspeaker.

15. A personal mobile communications device comprising a vibration actuator according to claim 13 or claim 14.

16. A resilient suspension member for suspending a mass element of a vibration actuator, the suspension member formed of a material having a Young's modulus less than 50MPa, preferably less than 20MPa.
